**Europäisches Patentamt**

(19) **European Patent Office**

**Office européen des brevets**

(11) Veröffentlichungsnummer: **0 171 390**
**B1**

(12) **EUROPÄISCHE PATENTSCHRIFT**

(45) Veröffentlichungstag der Patentschrift:
**04.11.87**

(21) Anmeldenummer: **84901347.9**

(22) Anmeldetag: **04.04.84**

(86) Internationale Anmeldenummer:
**PCT/EP 84/00096**

(87) Internationale Veröffentlichungsnummer:
**WO 84/04788 (06.12.84 Gazette 84/28)**

(51) Int. Cl.⁴: **F 16 D 35/00**

(54) **FLÜSSIGKEITSREIBUNGSKUPPLUNG.**

(30) Priorität: **01.06.83 PCT/EP83/00139**

(43) Veröffentlichungstag der Anmeldung:
**19.02.86 Patentblatt 86/8**

(45) Bekanntmachung des Hinweises auf die Patenterteilung:
**04.11.87 Patentblatt 87/45**

(84) Benannte Vertragsstaaten:
**DE**

(56) Entgegenhaltungen:
**DE-A-2 607 353**
**GB-A-1 411 283**
**US-A-2 838 244**
**US-A-3 011 607**
**US-A-3 019 875**
**US-A-4 040 559**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **GAZYAKAN, Ünal, Königsberger Str. 13, D-7990 Friedrichshafen (DE)**
Erfinder: **HOLDENRIED, Willy, Spiegelberg 21, D-7997 Immenstaad (DE)**
Erfinder: **EHRLINGER, Friedrich, Karl- Weiss- Str. 15, D-7990 Friedrichshafen (DE)**
Erfinder: **WIGGENHAUSER, Pedro, Adlerstr. 13, D-7997 Immenstaad (DE)**

(74) Vertreter: **Raue, Reimund, Zahnradfabrik Friedrichshafen AG Löwentaler Strasse 100 Postfach 2520, D-7990 Friedrichshafen 1 (DE)**

LIBER, STOCKHOLM 1987

## Beschreibung

Die Erfindung bezieht sich auf eine Flüssigkeitsreibungskupplung nach dem Oberbegriff des Anspruches 1.

Derartige Flüssigkeitsreibungskupplungen sind bekannt (DE-A-26 07 353). Sie werden vorteilhaft angewendet bei Verteilergetrieben und Differentialen, weil das übertragbare Drehmoment mit der Relativgeschwindigkeit zwischen den zu kuppelnden Teilen zunimmt. Um eine Kupplung mit hohem Drehmomentübertragungsvermögen in einem kleinen Bauraum zu verwirklichen ist es erforderlich, daß der zur Verfügung stehende Arbeitsraum von den Scheibensätzen gut genutzt und mit Arbeitsflüssigkeit annähernd vollständig aufgefüllt ist. Dies ist insofern problematisch, als während des Betriebes mit ansteigender Temperatur die Arbeitsflüssigkeit sich mehr ausdehnt als das Kupplungsgehäuse. Es werden daher Mittel vorgesehen, z. B. Gaspolster oder federbelastete Kolben, durch die erreicht wird, daß der maximale Druck den gewünschten bzw. zulässigen Druck nicht übersteigt.

Der Erfindung liegt die Aufgabe zugrunde, mit geringem Bauaufwand bei kleinem Bauvolumen eine Flüssigkeitsreibungskupplung zu schaffen, die in einem großen Betriebstemperaturbereich eingesetzt werden kann, ohne daß die Dichtungen und das Gehäuse durch einen zu hohen Innendruck überbeansprucht werden. Diese Aufgabe wird erfindungsgemäß bei einer Flüssigkeitsreibungskupplung der eingangs erwähnten Art durch das kennzeichnende Merkmal des ersten Anspruches gelöst.

Durch die erfindungsgemäße Gestaltung erreicht man, daß bei kleinen Hubbewegungen der Stirnseite eine relativ große Wärmeausdehnung des Arbeitsmittels ausgeglichen werden kann. Dabei ist es zweckmäßig, die nachgiebige Stirnwand am äußeren Umfang fest mit dem Gehäusemantel zu verbinden, wenn der fliehkraftabhängige Druckanteil der Arbeitsflüssigkeit einen möglichst geringen Einfluß auf die Nachgiebigkeit der Stirnwand ausüben soll. Ferner ergeben sich Vorteile in der Fertigung und Montage, indem eine vormontierte, allseitig geschlossene und funktionsmäßig überprüfte Kupplung als separates Bauteil in ein Getriebe eingesetzt werden kann.

In Ausgestaltung der Erfindung besteht die Stirnwand aus einem z-förmigen, selbständigen Bauteil, dessen innerer und äußerer achsparallele Schenkel zum Gehäusemantel bzw. zu einer inneren Hohlwelle abgedichtet ist. Die z-förmige Gestaltung läßt eine Biegung im Bereich einer zur Rotationsachse senkrechten Ebene zu, wobei die geringen radialen Änderungen der Abmessungen leicht von den Dichtungen aufgenommen werden können. Ein Winkel $\alpha$ zwischen 80 und 90° zwischen den im wesentlichen sich radial erstreckenden Teil der Stirnwand und der Rotationsachse ist besonders günstig.

Ein großes Ausgleichsvolumen bei geringen axialen Bewegungen der Dichtungselemente wird erzielt, wenn sich die Stirnwand im Bereich des äußeren Umfanges in axialer Richtung gegen ein elastisches Element abstützt. Die Stirnwand kann dadurch insgesamt axial nachgeben, bevor sie durch Biegung im radial inneren Teil nachgibt. Man erreicht dadurch ferner, daß die Federsteifigkeit des äußeren elastischen Elementes auf die Fliehkraftcharakteristik und die Federsteifigkeit der Stirnwand in erster Linie auf die Wärmedehnungscharakteristik ausgelegt werden kann.

Wird als elastisches Element eine Dichtung verwendet, so ergibt sich dadurch neben geringen Kosten der Vorteil, daß bei Drucksteigerung der Anpreßdruck der Dichtung erhöht und die Dichtwirkung verbessert wird.

Zweckmäßigerweise werden die axialen Wege der Stirnwand durch Anschläge begrenzt.

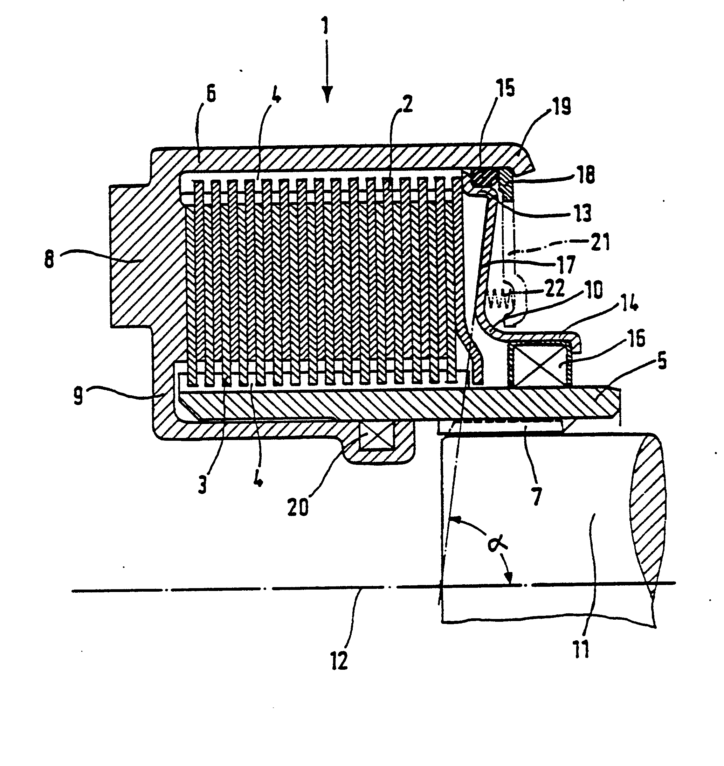

In der Zeichnung ist ein Ausführungsbeispiel der Erfindung dargestellt. Sie ist Gegenstand der Erfindung.

Die Figur zeigt eine Flüssigkeitsreibungskupplung 1 mit einem äußeren Scheibensatz 2 und einem inneren Scheibensatz 3, die über Mitnahmeverzahnungen 4 mit einem Gehäusemantel 6 bzw. einem Nabenteil 5 verbunden sind. Der Nabenteil 5 weist ein weiteres Mitnahmeprofil 7 auf zum Anschluß an eine Getriebewelle 11, die koaxial zur Rotationsachse 12 der Kupplung liegt.

Eine Stirnwand 9 des Gehäusemantels hat ein Anschlußteil 8 für ein weiteres, nicht näher dargestelltes Getriebeteil, mit dem die Getriebewelle 11 über die Kupplung 1 verbunden werden soll.

Eine gegenüberliegende Stirnwand 10 ist als Federmembran im Querschnitt z-förmig gestaltet. Zwei im wesentlichen koxial zur Rotationsachse 12 verlaufende Schenkel 13 und 14 sind an ihren Enden radial abgebogen und begrenzen Dichtungen 15 und 16. Der die beiden Schenkel 13 und 14 verbindende, im wesentlichen radial verlaufende Teil 17 der Stirnwand 10 ist zum äußeren Teil der Rotationsachse 12 geneigt, die seine Verlängerung unter einem Winkel von 80° bis 90° schneidet.

Die Dichtung 15 wird von einem Dichtring gebildet, der von dem Schenkel 13, dem Gehäusemantel 6 und einer Anschlag- und Begrenzungsscheibe 18 umgeben wird. Sie dient als elastisches Element und wird vom Druck in der Flüssigkeitsreibungskupplung solange zusammengepreßt, bis die Stirnwand 10 an der Begrenzungsscheibe 18 zur Anlage gelangt, der durch eine Umbördelung 19 im Gehäusemantel 6 gehalten ist. Bei weiterem Druckanstieg biegt sich die Stirnwand 10 membranartig auf, bis sie maximal an der radial nach innen gerichteten Verbreiterung 21 der Begrenzungsscheibe 18 anliegt. Durch eine besondere Ausgestaltung der Verbreiterung 21 der Anlagescheibe 18 und dort angeordnete elastische Elemente 22 kann die Federkennlinie der Stirnwand 10 den Anforderungen angepaßt werden.

Zwischen dem Nabenteil 5 und dem Gehäusemantel 6 ist eine weitere Radialdichtung 20 vorgesehen. Die dargestellten Verhältnisse entsprechen dem Ausgangszustand. Die Kupplung bildet ein in sich geschlossenes Bauteil, das in seiner Funktion auf dem Prüfstand geprüft werden kann und in einfacher Weise bei der Montage mit den entsprechenden Getriebeteilen verbunden wird. Im Falle eines Defektes ist sie ebenso leicht als ganzes Bauteil auszuwechseln.

## Patentansprüche

1. Flüssigkeitsreibungskupplung mit ineinandergreifenden Scheibensätzen (2, 3), die innerhalb eines abgeschlossenen, mit Arbeitsflüssigkeit gefüllten, ringzylindrischen Gehäuses (6) angeordnet sind und mit axial zu den Scheiben angeordneten Mitteln zum Ausgleich der Wärmedehnung des Arbeitsmediums, dadurch gekennzeichnet, daß wenigstens eine Stirnseite (10) des Gehäuses als Federmembran ausgebildet ist.

2. Kupplung nach Anspruch 1, dadurch gekennzeichnet, daß die nachgiebige Stirnwand (10) am äußeren Umfang fest mit einem Gehäusemantel (6) verbunden ist.

3. Kupplung nach Anspruch 1, dadurch gekennzeichnet, daß die Stirnwand (10) als selbständiges Bauteil im Querschnitt z-förmig gestaltet ist, wobei der äußere, im wesentlichen achsparallele Schenkel (13) mit dem Gehäusemantel (6) einen Raum für eine Dichtung (15) bildet und der innere, im wesentlichen achsparallele Schenkel (14) eine Radialdichtung (16) aufnimmt.

4. Kupplung nach Anspruch 3, dadurch gekennzeichnet, daß der sich im wesentlichen radial erstreckende Teil (17) der Stirnwand (10) mit der Rotationsachse (12) im unbelasteten Zustand einen Winkel α zwischen 80° und 90° einschließt.

5. Kupplung nach einem der Ansprüche 3 oder 4, dadurch gekennzeichnet, daß sich die Stirnwand (10) in einem äußeren Randbereich in axialer Richtung gegen ein elastisches Element (15) abstützt.

6. Kupplung nach Anspruch 5, dadurch gekennzeichnet, daß das elastische Element eine Dichtung (15) ist.

7. Kupplung nach einem der Ansprüche 3 bis 6, dadurch gekennzeichnet, daß ein Anschlag (18) vorgesehen ist, der, unabhängig voneinander, zunächst den axialen Weg und dann die Schwenkbewegung der Stirnwand (10) begrenzt.

8. Kupplung nach einem der vorangehenden Ansprüche, dadurch gekennzeichnet, daß sich die Stirnwand (10) in einem mittleren Bereich in axialer Richtung zusätzlich gegen ein weiteres elastisches Element (22) mechanisch, hydraulisch oder pneumatisch abstützt.

9. Kupplung nach Anspruch 8, dadurch gekennzeichnet, daß das hydraulische oder pneumatische Element extern gesteuert wird.

## Claims

1. Liquid friction clutch with sets of discs engaged in one another within a closed cylindrical housing filled with working fluid, and with means to compensate for the heat expansion of the working medium arranged axially to the discs, characterized in that at least one end face (10) of the housing acts as a spring diaphragm.

2. Clutch according to Claim 1, characterized in that the outer circumference of the flexible end face (10) is positively secured to the housing shell (6).

3. Clutch according to Claim 1, characterized in that the end face (10) is a single component and is Z-shaped in cross-section with an outer section (13) parallel to the axis and forming, together with the housing shell (6), a space for a seal (15), and with an inner section (14) parallel to the axis and having a radial seal (16).

4. Clutch according to Claim 3, characterized in that the central section (17) of the end face (10) in its unstressed condition forms an angle α of between 80° and 90° with the axis of rotation (12).

5. Clutch according to either Claim 3 or 4, characterized in that the outer circumference of the end face (10) rests against a flexible element (15) in an axial direction.

6. Clutch according to Claim 5, characterized in that the flexible element is a seal (15).

7. Clutch according to any one of Claims 3 to 6, characterized in that a stop (18) is fitted in such a way that it first restricts the axial travel and then the pivot movement of the end face (10), each independently of the other.

8. Clutch according to the preceding Claims, characterized in that the central section of the end face (10) is supported mechanically, hydraulically or pneumatically in an axial direction against a further spring element (22).

9. Clutch according to Claim 8, characterized in that the hydraulic or pneumatic element is subject to external control.

## Revendications

1. Embrayage à friction hydraulique avec jeux de disques emmanchés l'un dans l'autre et disposés à l'intérieur d'un carter cylindrique fermé rempli de lubrifiant de service et pourvus de moyens disposés axialement par rapport aux disques afin de compenser la dilatation thermique du moyen de fonctionnement, caractérisé par le fait qu'au moins une face frontale (10) du carter a la forme d'une membrane élastique.

2. Embrayage selon revendication 1, caractérisé par le fait que la face frontale flexible (10) est liée rigidement à une chemise de carter (6) sur le contour extérieur.

3. Embrayage selon revendication 1, caractérisé par le fait que la face frontale (10) est conçue en tant que composant indépendant en coupe transversale en forme de Z, alors que le montant extérieur (13) principalement parallèle à l'axe constitue avec la chemise du carter (6) un emplacement pour un joint (15) et le montant intérieur (14) principalement parallèle à l'axe reçoit un joint d'étanchéité radial (16).

4. Embrayage selon revendication 3, caractérisé par le fait que la partie (17) s'étendant principalement radialement de la face frontale (10) comprend avec l'axe de rotation (12) un angle M entre 80° et 90°, à l'état non chargé.

5. Embrayage selon une des revendications 3 et 4, caractérisé par le fait que la face frontale (10) appuie dans une zone du bord extérieur contre un élément élastique (15) en direction axiale.

6. Embrayage selon revendication 5, caractérisé par le fait que l'élément élastique est un joint (15).

7. Embrayage selon l'une des revendications 3 à 6, caractérisé par le fait qu'une butée (18) a été prévue, limitant tout d'abord la course axiale et ensuite le mouvement d'oscillation de la face frontale (10), indépendamment l'un de l'autre.

8. Embrayage selon une des revendications précédentes, caractérisé par le fait que la face frontale (10) appuie dans une zone moyenne en direction axiale en plus contre un autre élément élastique (22) sous forme mécanique, hydraulique ou pneumatique.

9. Embrayage selon revendication 8, caractérisé par le fait que l'élément hydraulique ou pneumatique est commandé extérieurement.